# EUROPÄISCHE PATENTANMELDUNG

(11) **EP 3 670 244 A1**
(43) Veröffentlichungstag der Anmeldung: **24.06.2020**
(21) Anmeldenummer: 19216404.4
(22) Anmeldetag: 16.12.2019
(51) Int. Cl.: B60L 53/12, B60L 53/14, B60L 53/24

(54) **LADEANORDNUNG ZUM INDUKTIVEN LADEN VON KRAFTFAHRZEUGEN**

(30) Priorität: 14.12.2018 DE 102018132215
(71) Anmelder: Zollner Elektronik AG, 93499 Zandt (DE)
(72) Erfinder: Jetz, Markus, 94264 Langdorf (DE)
(74) Vertreter: Bittner, Bernhard

(57) **Zusammenfassung**

Ladeanordnung (1) zum induktiven Laden von Kraftfahrzeugbatterien (10) mit, einer Ladeeinrichtung (2) und einem Kraftfahrzeug, wobei die Ladeeinrichtung (2) zumindest eine Ladespule aufweist, welche zum Laden der Kraftfahrzeugbatterie (10) mit einer fahrzeugseitigen Empfangsspuleneinrichtung (112) zusammenwirkt,
dadurch gekennzeichnet, dass
das Kraftfahrzeug mittels wenigstens einer Schaltungseinrichtung (150, 102, 104, 106) auch zum konduktiven Laden geeignet ist und diese Schaltungseinrichtung (150, 102, 104, 106) auch für den induktiven Ladevorgang geeignet und bestimmt ist und zumindest auch für den induktiven Ladevorgang aktivierbar ist.

## Beschreibung

Die vorliegende Erfindung bezieht sich auf eine Vorrichtung und ein Verfahren zum induktiven Laden von Kraftfahrzeugen. In jüngerer Zeit sind aus dem Stand der Technik Fahrzeuge bekannt geworden, welche einen Elektro- oder Hybridantrieb aufweisen. Derartige Kraftfahrzeuge werden entsprechend mittels elektrischer Energie geladen.

Im Stand der Technik bekannte Fahrzeuge, insbesondere Elektrofahrzeuge weisen eingebaute sogenannte On-Board-Ladegeräte auf. Diese Ladegeräte weisen in der Regel mehrere Möglichkeiten eines Netzanschlusses auf, um zum Beispiel bestehende einphasige Schukosteckdosen (230 V) oder dreiphasige CEE-Steckdosen (400 V) mittels Ladekabeln für das Laden einer Fahrzeugbatterie nutzen zu können. Die damit möglichen Ladeleistungen variieren von 3,5 kW über 6,5 kW bis teilweise 22 kW oder darüber hinaus, wobei dies auch von dem Fahrzeug und dem Hersteller abhängt.

Derartige leistungselektronische Hardware, aus der sich ein konduktiver On-Board-Lader aufbaut, weisen in der Regel ein Netzfrontend, welches wiederum einen Zwischenkreis zur Energiespeicherung für die Leistungsfaktorkorrekturschaltung (PFC) besitzt, auf. Daneben kann auch ein DC-DC-Wandler und/ oder ein HF-Transformator vorgesehen sein. Bei diesem Aufbau wird zunächst eine AC-DC-Wandlung mit einer anschließenden in der Regel galvanisch getrennten DC-DC-Wandlung vorgenommen, sodass zum Teil auch von zweistufigen Wandlern oder Ladern gesprochen wird.

Im Folgenden werden die Begriffe induktives Laden und konduktives Laden verwendet. Unter induktivem Laden wird ein Ladevorgang unter Verwendung von Induktion verstanden, insbesondere unter Verwendung von einer Ladespule und einer Empfängerspule. Unter konduktivem Laden wird ein Laden mittels direkter Leitungsverbindungen, beispielsweise unter Verwendung eines Netzkabels verstanden.

Insbesondere derartige induktive Ladesysteme sind häufig mit einem hohen elektronischen Aufwand verbunden, beispielsweise für Spannungswandler und dergleichen.

Der vorliegenden Erfindung liegt daher die Aufgabe zugrunde, einen entsprechenden baulichen bzw. elektronischen Aufwand für derartige induktive Ladungssysteme zu verringern. Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Ladeanordnung zum induktiven Laden von Kraftfahrzeugen weist eine Ladeeinrichtung und ein Kraftfahrzeug und insbesondere für eine Kraftfahrzeugbatterie auf, wobei die Ladeeinrichtung zumindest eine Ladespuleneinrichtung aufweist, welche zum Laden des Kraftfahrzeugs mit einer fahrzeugseitigen Empfangsspuleneinrichtung zusammenwirkt.

Erfindungsgemäß ist das Kraftfahrzeug mittels wenigstens einer Schaltungseinrichtung auch zum konduktiven Laden (der Kraftfahrzeugbatterie) geeignet und diese Schaltungseinrichtung ist zumindest teilweise auch für den induktiven Ladevorgang geeignet und bestimmt und zumindest auch für den induktiven Ladevorgang aktivierbar.

Es wird daher vorgeschlagen, dass die bereits im Kraftfahrzeug vorhandene On-Board-Elektronik zumindest teilweise auch für den induktiven Ladevorgang genutzt wird.

So können beispielsweise Elemente auch für den induktiven Ladevorgang verwendet werden, wie das oben erwähnte Netzfrontend, ein Zwischenkreis und/oder Wandlereinrichtungen. Ein solches Netzfrontend weist vorteilhaft einen Netzfilter auf, der von einer wenigstens ein- und allgemeiner einer ein- oder mehrphasigen Leistungsfaktorkorrekturschaltung (PFC) gefolgt ist. Diese PFC sorgt für eine sinusförmige Netzstromaufnahme und einen hohen Leistungsfaktor, der beispielsweise bei 0,99 liegen kann.

Diese PFC kann beispielsweise den Zwischenkreis laden, der beispielsweise als Spannungszwischenkreis mit Hilfe einer relativ hohen Kapazität ausgeführt sein kann. Eine Zwischenkreisspannung an dieser Kapazität ist in einem Nennbetrieb eine relativ hohe Gleichspannung (z. B. 400 V) mit einer überlagerten weiteren Spannung, etwa einer Rippelspannung, die im Bereich von mehreren Volt liegen kann.

Dabei ist es möglich, dass diese Zwischenkreisspannung eine Eingangsspannung für einen nachgeschalteten DC/CD-Wandler, der auch einen HF-Transformator aufweisen kann, bildet. Der Aufbau dieses Wandlers kann stark variieren. Bevorzugt ist dieser Wandler aus einer Gruppe von Wandlern ausgeführt, welche Vorwärtswandler mit Push-Pull-, Halb- oder Vollbrücke aufweisen.

Daneben können auch Resonanzwandler, wie LLC-Wandler verwendet werden. Ein HF-Transformator sorgt bevorzugt für die vorgeschriebene galvanische Trennung zwischen der Fahrzeugelektronik und dem Versorgungsnetz. Dabei können zweistufige Wandlerkonzepte vorgesehen sein, welche DC-Ladeströme mit einem sehr geringem Oberschwingungsanteil ermöglichen. Auf diese Weise kann teilweise auf Anforderungen der Kfz-Industrie reagiert werden.

Neben aus dem Stand der Technik bekannten zweistufigen Ladegeräten sind auch Konzepte bekannt, die einstufig arbeiten. Dabei handelt es sich bei diesen Konzepten um Leistungsfaktorkorrekturschaltungen mit HF-Transformator, da die sinusförmige Netzstromaufnahme und die galvanische Trennung zwischen dem Netz und dem Fahrzeug teilweise vorgeschrieben ist. Einstufige Wandlerkonzepte ermöglichen keinen reinen DC-Ladestrom. Der Ladestrom weist einen sehr hohen Oberschwingungsanteil auf. Beispiele für einstufige Wandler sind LLCs und Flybackschaltungen.

Bei induktiven Energieübertragungen, insbesondere mit Hilfe der Nahfeldkopplung, können für höhere Leistungen (mehrere hundert Watt bis Kilowatt) resonant abgestimmte Sende- und Empfangsspulen verwendet werden. Um die erforderlichen Ströme in den Spulen zu minimieren und damit den Wirkungsgrad der Energieübertragung zu maximieren, wird auf der Empfangsseite vorteilhaft eine sogenannte Lastanpassung durchgeführt.

Auch eine über große Bereiche variierende Batteriespannung kann eine Lastanpassung erfordern. Dabei ist es möglich, dass eine passive oder aktive Lastanpassung vorgenommen wird.

Bei der passiven Lastanpassung sind auf der Empfängerseite zusätzlich passive Bauteile, wie Kondensatoren und Spulen, vorgesehen, welche in bestimmter Art und Weise verschaltet sind, um mit der Änderung der Übertragungsfrequenz "verstimmt" werden zu können. Damit ändern sich die Impedanzverhältnisse auf der Empfangsseite, was zur Lastanpassung verwendet werden kann.

Die aktive Lastanpassung wird mit Hilfe einer geeigneten leistungselektronischen Schaltung mit ansteuerbaren Elementen, wie insbesondere aber nicht ausschließlich MOSFET- oder IGBT-Transistoren umgesetzt.

Mit diesen DC-DC-Stellern ist es vorteilhaft möglich, die Spannungs- und Stromverhältnisse über weite Bereiche zu ändern. Dies entspricht einer Änderung der empfangsseitigen Impedanzverhältnisse und ist deshalb für eine Lastanpassung geeignet.

Dabei sind bevorzugt die leistungselektronischen Steller aus einer Gruppe von Schaltungseinrichtungen ausgewählt, welche Hochsetzsteller (Boost Converter), Tiefsetsteller (Buck Converter) und Tief- und Hochsetsteller (Buck-Boost Converter) enthält.

Daneben wäre es zusätzlich oder anstelle des genannten möglich, den Gleichrichter selbst aus ansteuerbaren Schaltern zu realisieren, um damit bevorzugt Spannungs- und Stromverhältnisse so zu beeinflussen, dass eine Lastanpassung erreicht wird.

Weiterhin besteht die Möglichkeit, vor einer Gleichrichtereinheit beispielsweise auf der AC-Seite eine aktive Lastanpassung durchzuführen. In diesem Falle können AC-Schalter verwendet werden, die beispielsweise aus antiseriell verschalteten MOSFETs realisiert sind. Mit Hilfe dieser AC-Schalter können beispielsweise, wobei die Arbeitsfrequenz die Frequenz des Sendefelds ist, gezielt Impedanzen zum Beispiel kurzgeschlossen werden, um die Wirksamkeit auf die Dynamik des Systems zu beeinflussen. Mit der Ein- oder Abschaltdauer können damit die wirksamen Impedanzen verändert werden, was zur Lastanpassung genutzt werden kann.

Bei jeder der oben genannten Möglichkeiten zur Lastanpassung ist bevorzugt eine zusätzliche Elektronik vorgesehen, mit der die Strom- und Spannungsverhältnisse und damit die Impedanzverhältnisse aktiv verändert werden können. Dies bedeutet wie oben erwähnt einen zusätzlichen Aufwand an Bauteilen und Bauraum, um die Funktion der Lastanpassung bereitstellen zu können. Dieser Sachverhalt wird untenstehend unter Bezugnahme auf die Figuren genauer erläutert.

Wie oben erwähnt stellt sich die Erfindung die Aufgabe, den oben genannten zusätzlichen Aufwand an Elektronik für die Funktion der Lastanpassung zu minimieren, indem die bereits im Fahrzeug vorhandene Elektronik oder Teile davon genutzt werden.

So weisen beispielsweise vorhandene konduktive On-Board-Ladegeräte, welche mittels speziellen Kabeln mit dem öffentlichen Stromversorgungsnetz verbunden werden, unter Umständen geeignete Schaltungsteile auf, um damit bei dem induktiven Ladegerät die Funktion der Lastanpassung zu realisieren.

Das Nutzen vorhandener Elektronikkomponenten eines konduktiven On-Board-Ladegeräts für das induktive Laden stellt für die jeweilige Komponente keine Funktionseinschränkung dar, da das Aktivieren der einen Ladetechnologie üblicherweise (und insbesondere stets) die Abschaltung der anderen zur Folge hat. Es wird also in der Regel entweder konduktiv oder induktiv geladen. Untenstehend werden verschiedene Möglichkeiten der grundsätzlichen Aufbau- und Betriebsweise erläutert.

Durch den hier als Erfindung genannten Ansatz kann der Aufwand an Leistungselektronik im Fahrzeug erheblich reduziert werden. Da die Leistungselektronik, welche im Fall des induktiven Ladens für die Lastanpassung benötigt wird, praktisch komplett entfallen kann, werden voluminöse, schwere und teure Komponenten, wie Drosseln, Kondensatoren, Leistungshalbleiter, Platinen, Kupferschienen, Leitungen, Kühlkörper, Elemente zur Wasserkühlung, Gehäuse usw. durch die Erfindung vermieden.

Es gibt mehrere Möglichkeiten, die Erfindung anzuwenden. In der Figurenbeschreibung sind grundsätzlich und in Form von Blockschaltbildern Möglichkeiten zusammen mit zwei- oder einstufigen konduktiven On-Board-Ladeelektroniken dargestellt.

Bei einer bevorzugten Ausführungsform weist die Ladeanordnung bzw. das Ladesystem auch zusätzliche Elemente auf, insbesondere zusätzliche Elemente außerhalb des zu ladenden Fahrzeugs, das heißt es wird bevorzugt nicht ausschließlich mit der Elektronik des Fahrzeugs gearbeitet.

Bei einer weiteren bevorzugten Ausführungsform weist die Ladeanordnung eine Ladeeinheit zum konduktiven Laden und eine Ladeeinheit zum induktiven Laden auf, wobei besonders bevorzugt wenigstens ein elektronisches Bauteil sowohl zum konduktiven als auch zum induktiven Laden verwendet wird.

Bevorzugt ist daher das Kraftfahrzeug sowohl induktiv als auch konduktiv ladbar.

Bevorzugt ist dabei das Fahrzeug alternativ entweder rein konduktiv oder rein induktiv ladbar. Es wären jedoch auch Vorgehensweisen denkbar, bei denen auch zeitgleich sowohl eine induktive als auch eine konduktive Ladung vorgenommen werden.

Bei einer weiteren vorteilhaften Ausführungsform weist das Kraftfahrzeug eine Vielzahl von Schaltungseinrichtungen auf und insbesondere von Schaltungseinrichtungen, welche zumindest zeitweise aktivierbar und/oder deaktivierbar sind und/oder welche Bestandteil der Ladeanordnung sind.

Vorteilhaft ist dabei wenigstens eine dieser Schaltungseinrichtungen nur für den induktiven Ladevorgang aktivierbar.

Bei einer weiteren vorteilhaften Ausführungsform ist die wenigstens eine Schaltungseinrichtung, die nur für den induktiven Ladevorgang aktivierbar ist, eine Gleichrichtereinrichtung. Diese kann dabei verwendet werden, um etwa den induktiv übertragenen Wechselstrom in einen Gleichstrom zu wandeln, der zum Laden eines Batterieakkus dient.

Daneben weist die Ladeanordnung bevorzugt zwei und bevorzugt wenigstens zwei Gleichrichtereinrichtungen auf.

Bei einer weiteren vorteilhaften Ausführungsform ist wenigstens eine Schaltungseinrichtung nur für den konduktiven Ladevorgang aktivierbar.

Bei einer weiteren vorteilhaften Ausführungsform weist die Ladeanordnung eine Schalteinrichtung auf, um wahlweise einen konduktiven oder einen induktiven Ladevorgang zu aktivieren. Vorteilhaft bewirkt dabei diese Schalteinrichtung auch eine jeweilige Deaktivierung des anderen Ladevorgangs. So kann beispielsweise ein elektromagnetischer Schalter wie z. B. ein Relais vorgesehen sein, mit dem ein konduktiver oder induktiver Ladevorgang aktiviert werden kann.

Daneben kann auch eine Schalteinrichtung vorgesehen sein, welche beispielsweise auf das Anschließen eines Kabels für das konduktive Laden reagiert und in diesem Falle den konduktiven Ladevorgang aktiviert (wobei sie bevorzugt gleichzeitig einen möglichen induktiven Ladevorgang deaktiviert).

Daneben kann auch eine Schalteinrichtung vorgesehen sein, die einen der möglichen Ladevorgänge, das heißt den konduktiven oder den induktiven Ladevorgang, präferiert. Falls also beispielsweise festgestellt wird, dass beide Lademöglichkeiten gegeben sind, kann die Schalteinrichtung einen der beiden Ladevorgänge, beispielsweise den konduktiven Ladevorgang aktivieren.

Bei einer weiteren vorteilhaften Ausführungsform kann die Schalteinrichtung auch als Verriegelungsschalter z. B. als Relais mit gegeneinander mechanisch verriegelten Schließer- und Öffnerkontakten ausgeführt sein.

Bei einer weiteren vorteilhaften Ausführungsform ist die Schaltungseinrichtung aus einer Gruppe von Schaltungseinrichtungen ausgewählt, welche DC-DC-Wandler, insbesondere galvanisch getrennte DC-DC-Wandler, Zwischenkreise, PFC-Schaltungen, PFC-Schaltungen mit galvanischer Trennung und dergleichen aufweist.

Bei einer weiteren vorteilhaften Ausführungsform ist das Kraftfahrzeug sowohl induktiv als auch konduktiv ladbar, wobei bevorzugt wenigstens eine Schalteinrichtung der elektronischen Ladeeinheit sowohl für den induktiven Ladevorgang als auch für einen konduktiven Ladevorgang aktivierbar ist.

Bei einer weiteren vorteilhaften Ausführungsform kann der komplette leistungselektronische Pfad eines zweistufigen konduktiven Ladegeräts für eine Lastanpassung der induktiven Energieübertragung genutzt werden. Auf diese Weise ist es möglich, dass der Arbeitsbereich für eine Lastanpassung maximiert wird. Da ein zweistufiger On-Board-Lader aufgrund der gewählten Schaltungstopologien (ein Hochsetzsteller am Eingang und ein Tiefsetzsteller am Ausgang) in der Regel eine hoch- und tiefsetzstellende Funktion besitzt.

Damit kann die Lastimpedanz für das induktive Ladesystem auch bei großen Schwankungen der Kopplung zwischen Sende- und Empfangsspule optimal eingestellt werden. Auch große Schwankungen der Batteriespannung können durch den Ansatz abgedeckt werden. Damit ist ein maximaler Grad an Interoperabilität durch den Ansatz gegeben.

Allerdings ist unter Umständen die gesamte konduktive Leistungselektronik während des induktiven Ladens aktiv und kann unnötig hohe Verluste produzieren. Dies kann beispielsweise der Funktionsblock eines galvanisch getrennten DC-DC-Wandlers sein, da die galvanische Trennung ja bereits durch die induktive Energieübertragung gegeben ist und somit nur zusätzliche Verluste bringt.

Falls die gesamte konduktive Leistungselektronik zur Lastanpassung bei der induktiven Energieübertragung verwendet wird, können sich aus isolationstechnischen Überlegungen heraus weitere Vorteile ergeben. Üblicherweise befindet sich die Empfangsspule des induktiven Ladesystems an einer an der Fahrzeugaußenseite exponierten Stelle, wie beispielsweise am Unterboden oder hinter dem Nummernschild.

Damit ist im Falle eines Unfalls mit einer Beschädigung der Spuleneinheit zu rechnen. In diesem Fall bleibt die galvanische Trennung zwischen eventuell durch den Unfall freigelegten und jetzt berührbaren Teilen der Empfangsspule sowie deren Elektronikkomponenten und des HV-DC-Kreises des Fahrzeugs durch den getrennten DC-DC-Wandler bestehen. Allerdings besteht der Nachteil, dass die Empfangsspule und deren Elektronikkomponenten, die im Falle des konduktiven Ladens der Fahrzeugbatterie das Netzpotenzial aufweisen. Dies müsste bei der Isolationskoordination berücksichtigt werden. Ein Unfall und damit verbundene elektrische Gefahren sind damit während des konduktiven Ladens jedoch sehr unwahrscheinlich, da sich das Fahrzeug nicht bewegt.

Daneben kann man beispielsweise mittels eines Relais mit ausreichend Kontaktabstand die induktive Ladeelektronik während des konduktiven Ladens trennen. Auf diese Weise liegt niemals Netzpotenzial an der induktiven Elektronik an, was eine Erleichterung bei der Isolationskoordination zur Folge hat.

Alternativ oder zusätzlich wäre es auch möglich, im Falle der induktiven Energieübertragung die PFC abzuschalten und den galvanisch getrennten DC-DC-Wandler zur Lastanpassung zu nutzen. Auf diese Weise können die Verluste, welche die PFC-Schaltung verursacht (ein typischer Wirkungsgrad liegt bei 98 %) vermieden werden. Je nach gewählter Schaltungstopologie für den galvanisch getrennten DC-DC-Wandler steht eventuell nur eine tiefsetzstellende Funktion zur Verfügung. Im Falle zum Beispiel eines LLC-Wandlers kann auch eine hoch- und tiefsetzstellende Funktion durch den galvanisch getrennten DC-DC-Wandler gegeben sein.

Daneben ist es auch denkbar, dass nur die PFC-Schaltung, welche üblicherweise als Hochsetzsteller ausgeführt wird, genutzt wird. Dies ist möglich, da im Falle der induktiven Energieübertragung die galvanische Trennung der konduktiven Leistungselektronik nicht benötigt wird. Da dies unerwünscht hohen Verluste verursacht, kann dies in Abhängigkeit der Anforderungen an das induktive Ladesystem erfolgen, falls für die Lastanpassung eine hochsetzstellende Funktion ausreicht. Der galvanisch getrennte DC-DC-Wandler wird in diesem Falle überbrückt, was beispielsweise mit Hilfe eines Relais mit ausreichend Kontaktabstand im Falle der induktiven Energieübertragung erfolgen kann.

Hinsichtlich der praktischen Umsetzung der oben beschriebenen Idee bestehen mehrere Möglichkeiten. Diese hängen auch davon ab, wie die Anforderungen an ein induktives Ladesystem definiert sind. So ist es möglich, dass die Elektronik eines konduktiven Ladegeräts direkt unter Berücksichtigung einer induktiven Ladekomponente optimal entwickelt wird. Da die konduktiven Ladegeräte für bestimmte Fahrzeugreihen bei den verschiedenen Herstellern jedoch teilweise schon entwickelt wurden oder sich bereits weit in der Entwicklung befinden, ist dies nicht immer möglich.

Bei einer weiteren Ausgestaltung ist das Ladekonzept aus konduktiver und induktiver Lademöglichkeit so gewählt, dass die PFC-Schaltung für das konduktive Laden nur für 3,7 kW Leistung dimensioniert ist, der galvanisch getrennte DC-DC-Wandler jedoch für 11 kW. Damit kann der Besitzer die so ausgestatteten Elektrofahrzeuge beispielsweise zuhause schnell und induktiv mit 11 kW laden. Die Elektroinstallation ist bevorzugt entsprechend ausgeführt.

Falls das Fahrzeug jedoch unterwegs geladen werden muss und dabei nur eine normale Steckdose zur Verfügung steht, was als üblich angesehen werden kann, kann diese in der Regel mit maximal 16 A Strom belastet werden. Dies entspricht bei einer Netzspannung von 230 V ca. einer verfügbaren Leistung von 3,7 kW. Oft werden jedoch normale Haushaltssteckdosen, welche in der Regel mit 1,5 mm² Kupferleitung installiert werden, mit 10 A Leistungsschutzschaltern abzusichern. In diesem Fall kann bei 230 V Netzspannung dauerhaft nur ca. 2300 W Leistung entnommen werden.

Ist die PFC-Schaltung für eine geringere Leistung von z. B. 3,7 kW auszuführen, ist es auch einfacher die galvanische Trennung in der PFC-Schaltung umzusetzen. Hier eignen sich besonders robuste Flyback-Wandler, mit welchen auch einfach eine "natürliche PFC Funktion" realisiert werden kann.

Diese Wandler sind bei richtiger Dimensionierung ohne weiteres für den weltweiten Einsatz tauglich und funktionieren mit praktisch beliebigen Spannungskurvenformen.

Weitere Vorteile und Ausführungsformen ergeben sich aus den beigefügten Figuren.

Darin zeigen:
- Fig. 1: Ein vereinfachtes Blockschaltbild eines zweistufigen On-Board-Fahrzeugladers;
- Fig. 2: Ein Schaltungsbeispiel für ein zweistufiges Wandlerkonzept für einphasigen Wechselstrom;
- Fig. 3: Ein Schaltungsbeispiel für ein zweistufiges Wandlerkonzept für dreiphasigen Wechselstrom;
- Fig. 4: Ein vereinfachtes Blockschaltbild eines einstufigen On-BoardFahrzeugladers;
- Fig. 5: Ein Schaltungsbeispiel für ein einstufiges Wandlerkonzept;
- Fig. 6: Ein vereinfachtes Blockschaltbild einer Empfangsseite mit Resonator, Gleichrichter und Steller zur Lastanpassung;
- Fig. 7: Eine Ausführungsform einer Schaltungstopologie einer serienresonanten Empfangsspule mit aktivem Gleichrichter zur Lastanpassung;
- Fig. 8: Eine Ausführungsform einer Schaltungstopologie mit einer aktiven Lastanpassung durch einen AC-Schalter auf der AC-Seite eines HF-Gleichrichters;
- Fig. 8a,8b: Ideales Schaltsymbol und mögliche Realisierung des AC-Schalters;
- Fig. 9: Ein Blockschaltbild einer möglichen Ladeelektronik in einem Fahrzeug mit zweistufiger konduktiver Ladeelektronik und induktiver Ladeelektronik mit Lastanpassung;
- Fig. 10a: Ein Blockschaltbild einer Ausführungsform einer Ladeelektronik in einem Kraftfahrzeug mit zweistufiger konduktiver Elektronik und induktiver Ladeelektronik bei aktivem konduktiven Laden;
- Fig. 10b: Das Blockschaltbild aus Fig. 10a bei aktivem induktivem Laden;
- Fig. 11a: Ein Blockschaltbild einer Ausführungsform einer Ladeelektronik im Fahrzeug mit zweistufiger konduktiver Elektronik und induktiver Ladeelektronik, wobei zur Lastanpassung beim induktiven Laden ein Teil der konduktiven Leistungselektronik verwendet wird, für den Zustand des konduktiven Ladens;
- Fig. 11b: Die Schaltung aus Figur 11a bei induktivem Laden;
- Fig. 12a: Ein Blockschaltbild einer Ausführungsform einer Ladeelektronik in einem Kraftfahrzeug mit zweistufiger konduktiver Elektronik und induktiver Ladeelektronik, wobei zur Lastanpassung beim induktiven Laden eine PFC-Schaltung der konduktiven Leistungselektronik verwendet wird, in einem Zustand des konduktiven Ladens;
- Fig. 12b: Schaltung aus Figur 12a für induktives Laden;
- Fig. 13a: Ein Blockschaltbild einer möglichen Ladeelektronik in einem Fahrzeug mit einstufiger konduktiver Elektronik und induktiver Ladeelektronik, wobei zur Lastanpassung beim induktiven Laden die konduktive Leistungselektronik verwendet wird, in einem Zustand des konduktiven Ladens;
- Fig. 13b: Das Schaltbild aus Figur 13a bei induktivem Laden;
- Fig. 14a: Ein Konzept einer fahrzeugseitigen Ladeelektronik für konduktives und induktives Laden bei galvanischer Trennung im Falle des konduktiven Ladens durch einen galvanisch getrennten DCC-Wandler;
- Fig. 14b: Die Schaltung aus Fig. 14a im Falle des konduktiven Ladens durch eine PFC-Schaltung mit galvanischer Trennung;
- Fig. 15: Ein Blockschaltbild zum Einfügen eines induktiven Ladekonzepts in ein bestehendes konduktives Ladekonzept;
- Fig. 16: Eine mögliche Schaltungstopologie des Blockschaltbilds aus Figur 15 im Falle eines 3,7 kW On-Board-Ladegeräts;
- Fig. 17: Eine mögliche Schaltungstopologie, um Teile des Fahrumrichters für die Lastanpassung der induktiven Energieübertragung nutzen zu können (Hochsetzsteller);
- Fig. 18: Eine Darstellung des induktiven Ladens mit Fahrumrichter und Motorinduktivitäten als Hochsetzsteller zur Lastanpassung, wobei eine Taktung von HB2 vorliegt und ein Stromfluss in der Freilaufphase des Hochsetzstellers gestrichelt dargestellt ist;
- Fig. 19: Die Darstellung aus Figur 18, wobei HB2 und HB3 getaktet sind und der Stromfluss in der Freilaufphase in der interleaved betriebenen Hochsetsteller gestrichelt dargestellt ist; und
- Fig. 20: Eine Darstellung eines induktiven Ladens mit Fahrumrichter und Motorinduktivitäten als Hochsetzsteller zur Lastanpassung, wobei HB1, HB2 und HB3 getaktet werden und der Stromfluss in der Freilaufphase der interleaved betriebenen Hochsetzsteller gestrichelt dargestellt ist.

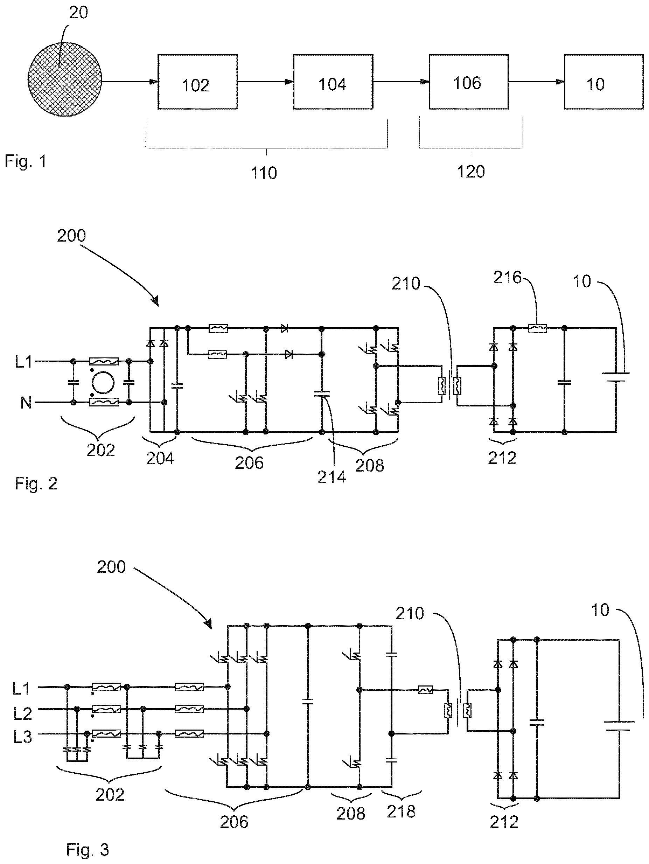

Figur 1 zeigt ein vereinfachtes Blockschaltbild eines hier zweistufigen On-Board-Fahrzeugladers. Dabei ist hier ein Versorgungsnetz 20 vorgesehen. Das Bezugszeichen 102 kennzeichnet eine PFC und das Bezugszeichen 104 einen Zwischenkreis. Diese beiden Einrichtungen sind dabei Bestandteile einer ersten Wandlerstufe 110. Das Bezugszeichen 106 kennzeichnet einen galvanisch getrennten DC-DC-Wandler, der eine zweite Wandlerstufe 120 darstellt. Das Bezugszeichen 10 kennzeichnet den zu ladenden Fahrzeugakku bzw. Energiespeicher.

Figur 2 zeigt ein Schaltungsbeispiel für ein zweitstufiges Wandlerkonzept 200, hier für einphasigen Wechselstrom. Dabei bezeichnet das Bezugszeichen L1 die Phase oder Außenleiter und das Bezugszeichen N den Anschluss des Neutralleiters.

Das Bezugszeichen 202 kennzeichnet einen Netzfilter. Diesem Netzfilter 202 ist ein LF-Gleichrichter 204 nachgeschaltet. Das Bezugszeichen 206 kennzeichnet eine PFC - Boost - Schalteinrichtung und das Bezugszeichen 208 einen HF - Wechselrichter. Über einen HF - Transformator 210 und einen HF - Gleichrichter ist die Fahrzeugbatterie angeschlossen. Dabei bilden dieser HF - Wechselrichter, der HF - Transformator und der HF - Gleichrichter einen Vollbrücken - Vorwärtswandler. Das Bezugszeichen 216 kennzeichnet eine Speicherdrossel, die ebenfalls Bestandteil dieses Vollbrücken - Vorwärtswandlers sein kann und das Bezugszeichen 214 kennzeichnet einen Kondensator, welcher den Spannungszwischenkreis bildet.

Fig. 3 zeigt ein Schaltungsbeispiel ähnlich demjenigen in Fig. 2 jedoch für einen dreiphasigen Wechselstrom mit den Phasen oder Außenleitern L1, L2, und L3. Auch hier ist wieder ein Netzfilter 202 vorgesehen, dem eine PFC - Boost - Schalteinrichtung 206 folgt. Das Bezugszeichen 208 zeigt einen HF- Wechselrichter und das Bezugszeichen 218 einen Resonanzkreis. Auch sind wieder ein HF - Transformator 210 und ein HF - Gleichrichter 212 vorgesehen.

Die Funktion, die in der Figur 2 der Vorwärtswandler bereitstellt wird hier mit Hilfe eines Resonanzwandlers gewährleistet. Es ist aber auch möglich in Figur 2 einen Resonanzwandler und in Figur 3 einen Vorwärtswandler vorzusehen. Auch andere Wandlertopologien mit galvanischer Trennung sind sowohl für Figur 2 und Figur 3 denkbar wie z. B. Flyback, DAB-Konverter, Push-Pull-Konverter, LLC-Resonanzwandler.

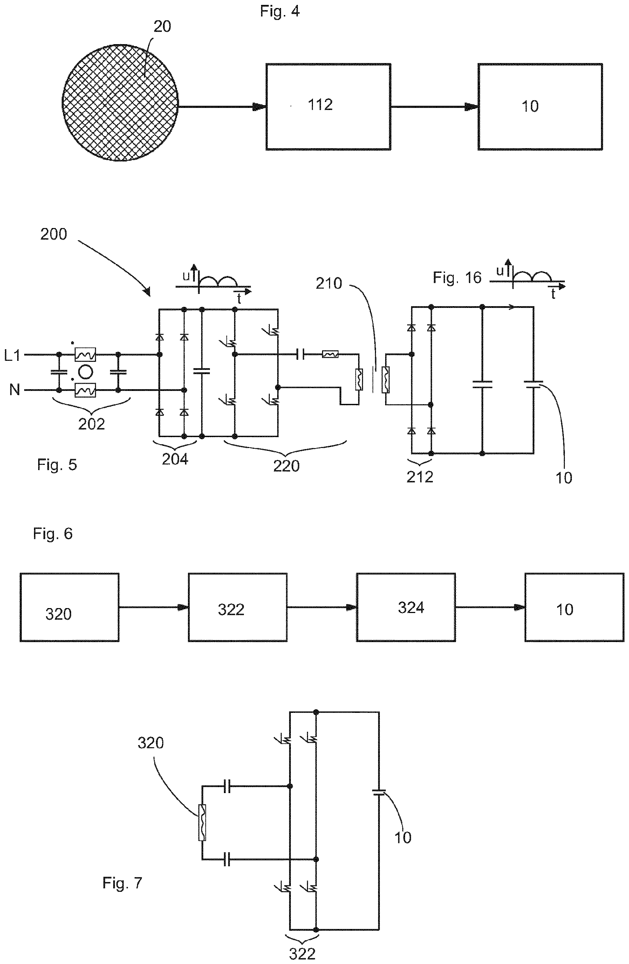

Figur 4 zeigt eine vereinfachte Darstellung eines Blockschaltbilds eines einstufigen On-Board-Fahrzeugladers. Dieser weist hier eine PFC mit galvanischer Trennung 112 auf sowie den Fahrzeugakku 10.

Figur 5 zeigt ein Schaltungsbeispiel für ein einstufiges Wandlerkonzept. An das Netz mit dem Außenleiter L1 und dem Neutralleiter N schließt sich hier zunächst ein Netzfilter 202 an. Auf diesen Netzfilter folgt ein Niederfrequenz- (LF) Gleichrichter 204 sowie ein LLC-Wandler 220. An diesen Wandler schließt sich ein Hochfrequenztransformator 210 an und an diesen wiederum ein HF-Gleichrichter. Das Bezugszeichen 10 kennzeichnet wiederum die Fahrzeugbatterie. Auch Flybackschaltungen wären grundsätzlich dazu geeignet einstufige Wandlerkonzepte umzusetzen.

Wie oben erwähnt, ist es aus dem Stand der Technik bekannt, um die erforderlichen Ströme in den Spulen zu minimieren und damit den Wirkungsgrad der Energieübertragung zu maximieren, auf der Empfangsseite eine sogenannte Lastanpassung durchzuführen.

Figur 6 zeigt eine Darstellung einer Empfangsseite. Dabei bezieht sich das Bezugszeichen 320 auf eine Empfangsspule, die bevorzugt einen Resonanzkreis aufweisen kann. Das Bezugszeichen 322 kennzeichnet einen passiven oder aktiven Gleichrichter, das Bezugszeichen 324 einen DC-DC-Wandler und das Bezugszeichen 10 wiederum den Fahrzeugakku. Daneben gibt es die Möglichkeit, den Gleichrichter selbst aus ansteuerbaren Schaltern, als sogenannten aktiven Gleichrichter, zu realisieren und damit Spannungs- und Stromverhältnisse für eine Lastanpassung zu beeinflussen und so den DC-DC-Wandler 324 einzusparen.

Figur 7 zeigt eine mögliche Schaltungstopologie einer serienresonanten Empfangsspule mit einem aktiven Gleichrichter. Genauer bezieht sich das Bezugszeichen 320 wiederum auf die Empfangsspule und das Bezugszeichen 322 auf einen aktiven Gleichrichter.

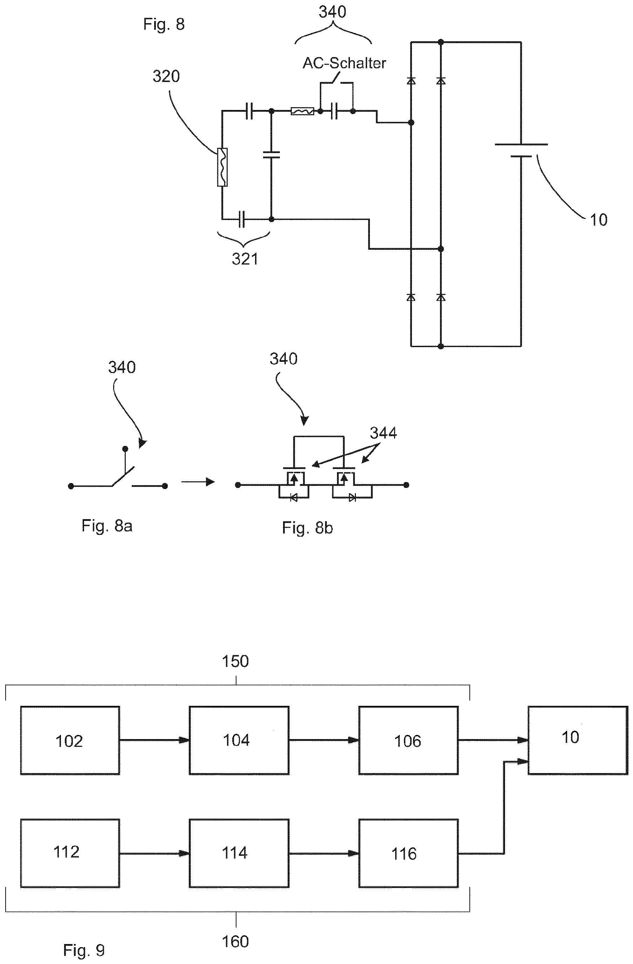

Figur 8 zeigt eine Schaltungstopologie einer serienresonanten Empfangsspule mit passivem Gleichrichter. Dabei schließt sich an die Empfangsspule 320 der Resonator 321 an und es ist ein AC-Schalter 340 zur Lastanpassung vorgesehen. Die Figuren 8a und 8b zeigen zwei mögliche Ausgestaltungen dieses Schalters. Bei der in Figur 8b gezeigten Situation sind als Schaltelemente MOSFETs 344 eingesetzt.

Figur 9 zeigt eine Darstellung eines Blockschaltbilds einer möglichen Ladeelektronik in einem Fahrzeug mit zweistufiger konduktiver Ladeelektronik und induktiver Ladeelektronik mit Lastanpassung. Dabei bezieht sich das Bezugszeichen 102 wiederum auf eine PFC, der ein Zwischenkreis 104 folgt sowie ein galvanisch getrennter DC-DC-Wandler. Diese drei Elemente bilden gemeinsam die On-Board-Leistungselektronik 150 zum konduktiven Laden.

Das Bezugszeichen 112 kennzeichnet die Empfangsspule mit Resonanzkreis, das Bezugszeichen 114 einen Gleichrichter und das Bezugszeichen 116 einen DC-DC-Wandler. Diese drei Elemente bilden hier die Onboard-Leistungselektronink zum induktiven Laden 160 Das Bezugszeichen 10 kennzeichnet wiederum den Fahrzeugakku, der alternativ konduktiv und induktiv geladen werden kann.

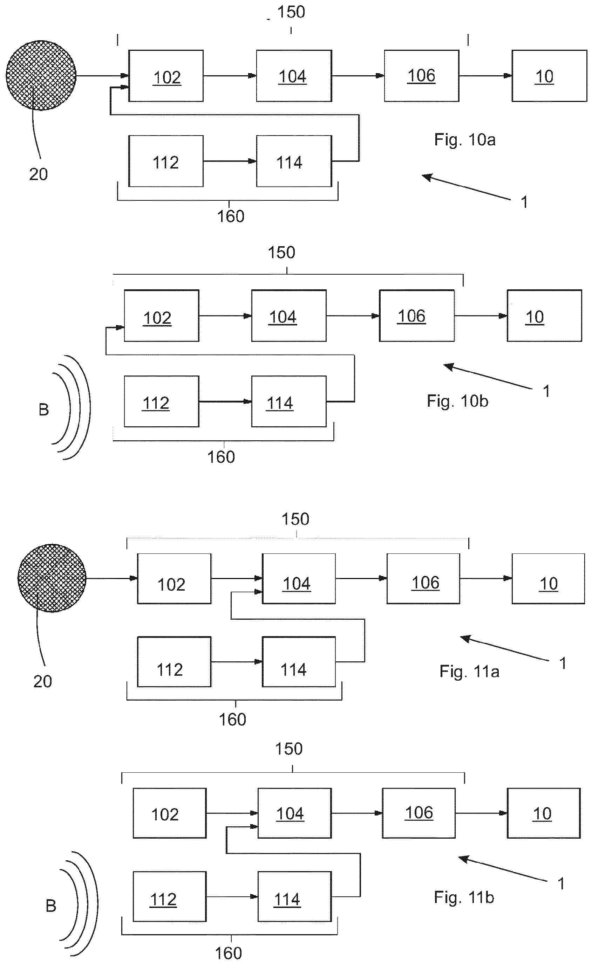

Die Figuren 10a und 10b zeigen eine Darstellung zur Durchführung einer konduktiven Ladung einer induktiven Ladung. Das Bezugszeichen 1 kennzeichnet die Ladeanordnung in ihrer Gesamtheit. Dabei sind wiederum die Bestandteile, die in Figur 9 gezeigt waren, vorgesehen. Bei der in Figur 10a gezeigten Situation erfolgt ein konduktives Laden, sodass die Elemente mit den unterstrichenen Bezugszeichen 102, 104, 106 aktiv sind. Die Elemente 112 und 114 hingegen sind hier nicht aktiv.

Bei der in Figur 10b gezeigten Situation sind sämtliche Elemente aktiv, das heißt die Empfangsspule 112, der Gleichrichter 114, die PFC 102, der Zwischenkreis 104 und der galvanisch getrennte DCD-Wandler 106. Das Bezugszeichen 300 kennzeichnet eine Sendespule bzw. Primärspule. Die Empfangsspule 112 kann auch als Sekundärspule bezeichnet werden.

Man erkennt, dass die Elemente 102, 104, 106 für beide Ladevorgänge genutzt werden können. Da jedoch nicht gleichzeitig ein induktiver und konduktiver Ladevorgang vorgenommen wird genügt es, wenn diese Elemente nur einfach bereitstehen.

Damit wird bei dieser Ausgestaltung der komplette leistungselektronische Pfad des zweistufigen konduktiven Ladegeräts für die Lastanpassung der induktiven Energieübertragung genutzt. Dies bringt den grundsätzlichen Vorteil, dass der Arbeitsbereich für die Lastanpassung maximiert wird und dass der zweistufige On-Board-Lader aufgrund der gewählten Schaltungstopologien einen Hochsetzsteller am Eingang und einen Tiefsetzsteller am Ausgang in der Regel eine hoch- und tiefsetzstellende Funktion besitzt.

Die Figuren 11a und 11b zeigen eine Darstellung zur Durchführung einer konduktiven Ladung einer induktiven Ladung. Dabei sind wiederum die Bestandteile, die in Figur 9 gezeigt waren, vorgesehen. Bei der in Figur 11a gezeigten Situation erfolgt ein konduktives Laden, sodass die Elemente mit den unterstrichenen Bezugszeichen 102, 104, 106 aktiv sind. Die Elemente 112 und 114 hingegen sind hier nicht aktiv.

Bei der in Figur 11b gezeigten Situation sind sämtliche Elemente mit Ausnahme der PFC 102 aktiv.

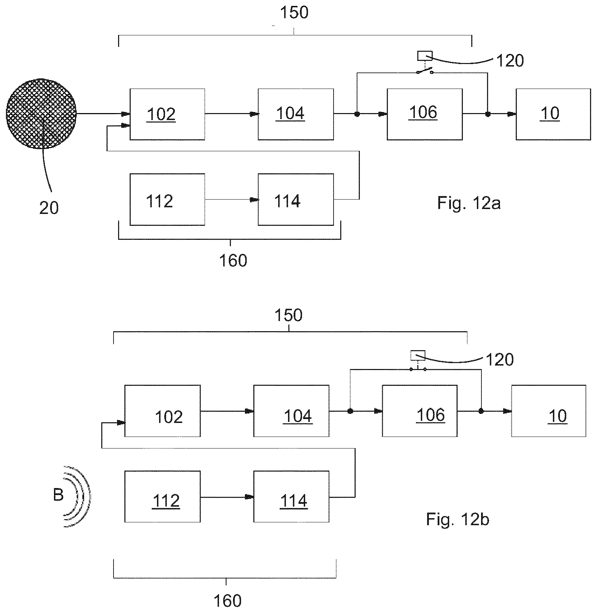

Die Fig. 12a und 12b zeigen eine Schaltungsanordnung ähnlich derjenigen in den Fig. 10a und 10b Dabei ist zusätzlich ein Überbrückungsschalter 120 für den galvanisch getrennten DCDC - Wandler 106 vorgesehen.

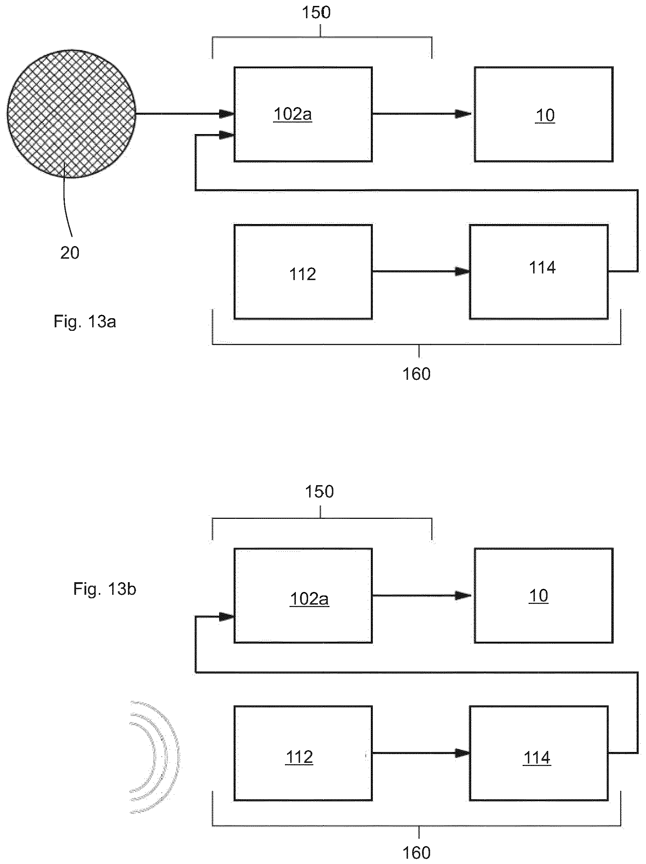

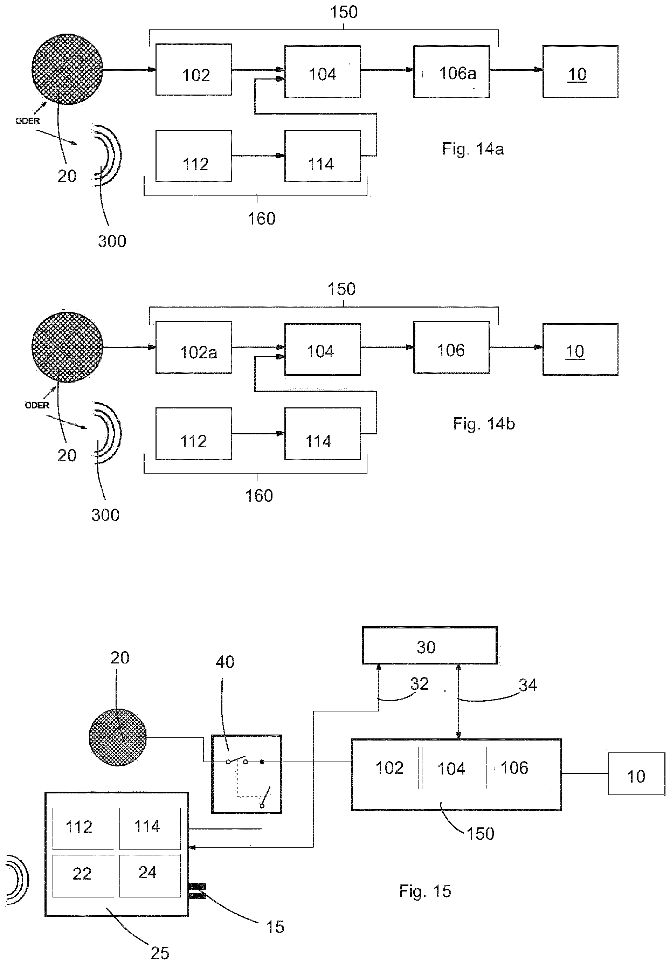

Die Fig. 13a und 13b zeigen ein weiteres Beispiel einer Ladeelektronik für konduktives und induktives Laden. In der Fig. 13a ist die Situation des konduktiven und in Fig. 14a des induktiven Ladens gezeigt. Das konduktive Laden wird vollständig von einer galvanisch getrennten PFC Schaltung 102a zur Verfügung gestellt und die Fahrzeugbatterie (10) mit pulsierendem Gleichstrom geladen. Ein zusätzlicher, der PFC-Stufe nachgeschalteter, DCDC-Wandler ist so nicht mehr erforderlich. Es wird hier auch von sogenannten einstufigen Ladegeräten gesprochen.

Die Fig. 14a zeigt ein weiteres Beispiel einer Ladeelektronik für konduktives- und induktives Laden. Bei der in Fig. 14a gezeigten Situation erfolgt während des konduktiven Ladens eine galvanische Trennung durch den galvanisch getrennten DCDC-Wandler 106.

Die Fig. 14b zeigt ein weiteres Beispiel einer Ladeelektronik für konduktives- und induktives Laden. Bei der in Fig. 14b gezeigten Situation erfolgt während des konduktiven Ladens eine galvanische Trennung durch eine PFC - Schaltung mit galvanischer Trennung 102a.

Mit dem in Fig. 14b dargestellten DCDC-Wandler 106a, kann eine PFC-Schaltung welche mit z. B. sehr geringen Netzspannungen versorgt wird, "entlastet" werden, indem der DCDC-Wandler seine Eingangsspannung, welche gleichzeitig die Ausgangspannung der PFC ist, zu Gunsten des Betriebs der PFC-Schaltung innerhalb bestimmter Grenzen verändern kann.

Wird die konduktive und die induktive Ladeelektronik nicht von vorneherein zusammen konzipiert, sondern es soll die Möglichkeit der induktiven Energieübertragung nachträglich mit einer bestehenden konduktiven Ladeelektronik vereint werden, entstehen aufs Neue verschiedene Möglichkeiten der technischen Ausführung.

Jede der möglichen Varianten der Umsetzung weist bestimmte technische Merkmale wie z. B. Bauformen, Entwärmungsmöglichkeiten usw. auf, welche je nach Anforderungen des Fahrzeugherstellers sowohl Vor- als auch Nachteil sein können.

So kann z. B. eine möglichst einfache Empfangsspuleneinheit wünschenswert sein, welche außer der Spule an sich und z. B. den Resonanzkondensatoren keine weiteren leistungselektronischen Komponenten aufweist. Dadurch kann die Empfangsspuleneinheit mit minimierter Baugröße entwickelt werden.

Eventuell kann es sogar ausreichen, diese Empfangsspuleneinheit passiv zu kühlen, was den aufwändigen Anschluss einer Wasserkühlung erspart. Die genannten Vorteile müssen jedoch ggfs. an anderer Stelle erkauft werden. Z. B. ist jetzt eine komplexere AC-, anstelle der einfacheren DC-Verbindungsleitung zwischen der Empfangsspuleneinheit und der weiteren Leistungselektronik erforderlich. Der HF-Gleichrichter als wichtiger Bestandteil des induktiven Ladesystems muss jetzt u. U. in einem eigenen Gehäuse mit entsprechender Kühlung untergebracht werden. Es wird damit ersichtlich, dass je nach Gewichtung der verschiedenen Anforderungen verschiedene technische Vor- und Nachteile genutzt bzw. in Kauf genommen werden können und müssen.

Nachfolgend sind nun mehrere Möglichkeiten der technischen Umsetzung dargestellt. Die jeweiligen Eigenschaften, welche je nach Gewichtung von verschiedenen Anforderungen Vor- oder Nachteile sein können, werden kurz vorgestellt.

Fig. 15 zeigt eine mögliche Ausführungsform, bei der ein bestehender zweistufiger konduktiver Onboard-Ladegerät 150 für die induktive Energieübertragung genutzt wird. Ein einstufiger konduktiver Onboard-Lader ist an der Stelle auch möglich. Die gesamte für die induktive Ladetechnik benötigte Elektronik ist hier in der Empfangsspuleneinheit untergebracht.

Ein Verriegelungsschalter 40 wie z. B. ein Relais mit ausreichender Stromtragfähigkeit und ausreichendem Kontaktabstand verhindert das gleichzeitige konduktive und induktive Laden. Der Anschluss 15 einer Wasserkühlung für die Empfangsspuleneinheit ist in der Figur 15 angedeutet, aber u. U. nicht zwingend erforderlich.

Ein aktives betreiben der PFC ist nicht immer zwingend erforderlich. Wenn z. B. bei gut gekoppelten induktiven Sende- und Empfangsspulen die Ausgangsspannung der HF-Gleichrichters relativ hoch ist, ist der Betrieb des Hochsetzstellers nicht erforderlich.

Das Bezugszeichen 30 kennzeichnet ein übergeordnetes Fahrzeug - Steuergerät. Dieses steht in Kommunikationsverbindung mit dem Onboard-Ladegerät 150 und mit der Empfangsspuleneinheit 25. Dabei können beispielsweise Soll- und Istwerte sowie Steuerbefehle ausgetauscht werden. Die Bezugszeichen 32 und 34 kennzeichnen entsprechende Kommunikationsleitungen.

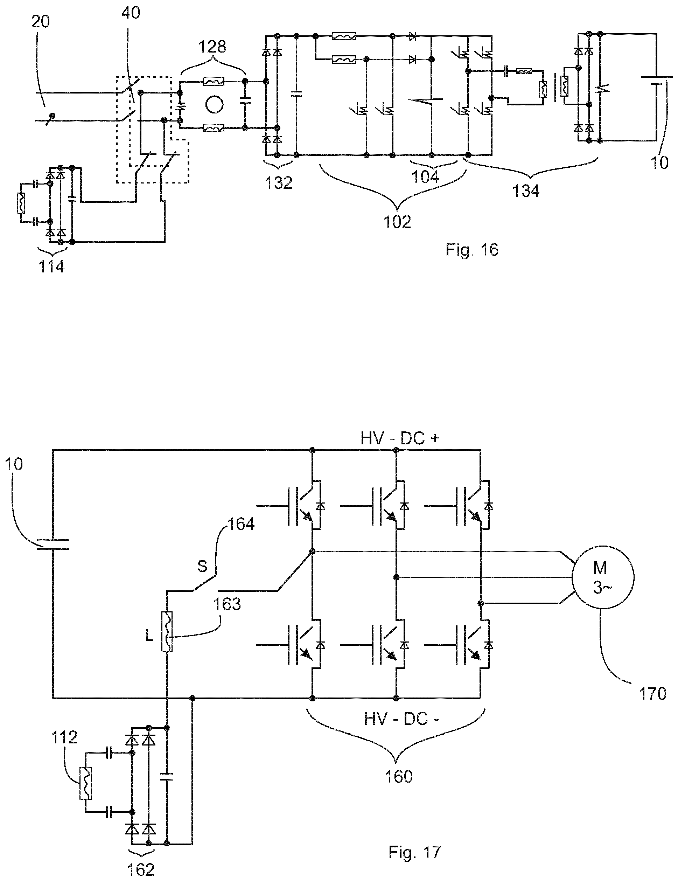

Fig. 16 zeigt eine mögliche Schaltungstopologie im Fall eines einphasigen 3,7kW konduktiven Onboard-Ladegeräts. Das Bezugszeichen 128 kennzeichnet dabei einen Netzfilter, weiterhin ist ein LLC - Wandler vorgesehen.

Auch bestehende konduktive Ladegeräte für höhere Leistungen wie z. B. 7,7 kw, 11 kW, 22 kW oder darüber hinaus, welche aus dem Drehstromnetz mit zwei bzw. drei Außenleitern versorgt werden, können auf die oben beschriebene Art und Weise für die induktive Energieübertragung bzw. die Lastanpassung verwendet werden.

Fig. 17 zeigt eine mögliche Schaltungstopologie, um Teile des Fahrumrichters für die Lastanpassung der induktiven Energieübertragung nutzen zu können (Hochsetzsteller).

Neben der Leistungselektronik von bestehenden konduktiven Onboard-Ladegeräten kann grundsätzlich auch die Leistungselektronik des Fahrumrichters genutzt werden. Üblicherweise ist der Fahrumrichter 160 als B6 Vollbrücke ausgeführt. Wird wie in Fig. 17 dargestellt eine der drei Halbbrücken über eine Speicherdrossel 163 mit dem Ausgang des HF-Gleichrichters 162 der induktiven Ladeeinheit verbunden, kann eine Hochsetzsteller-Schaltung einfach realisiert werden. Das Bezugszeichen 164 kennzeichnet einen Schalter. Da die übrigen zwei Halbbrücken im Falle des induktiven Ladens nicht getaktet werden, fließen keine drehmomentbildenden Ströme in den Motor 170.

Im Fahrbetrieb wird der Schalter 164 geöffnet, im Falle des induktiven Ladens ist der Schalter 164 geschlossen. Da der Fahrumrichter in der Regel in IGBT Technologie ausgeführt ist, die Halbleiter für sehr hohe Ströme von mehreren hundert Ampere ausgelegt sind und die Induktivitäten der Motorwicklungen u. U. im mH-Bereich liegen, sind Taktfrequenzen von 5 kHz bis 10 kHz üblich. Diese Taktfrequenzen sollten auch im Falle der induktiven Energieübertragung nicht überschritten werden.

Deshalb wird die Drossel 163 sinnvollerweise eine hohe Induktivität im mH - Bereich aufweisen. Hochpermeable Schnittbandkerne sind mögliche Kandidaten für den Kern dieser Drossel. Das Bezugszeichen 162 bezieht sich auf einen HF - Gleichrichter.

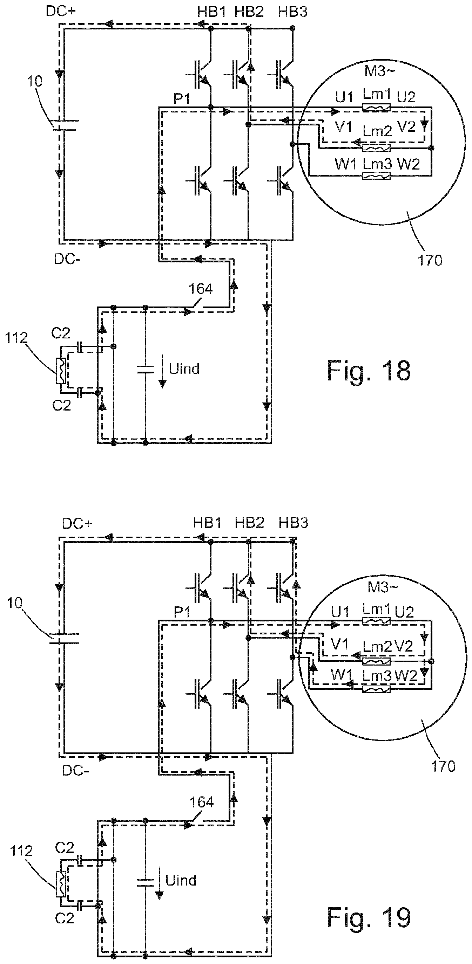

Eine weitere Möglichkeit, den bestehenden Fahrumrichter eines Elektrofahrzeuges zu nutzen ist in Fig. 18 dargestellt. Die Vereinfachung zum vorhergehenden Ansatz hinsichtlich des Bauteilaufwandes wird dabei angestrebt. Jetzt wird die Induktivität der Motorwicklungen verwendet, um die Speicherdrossel aus dem vorigen Ansatz zu ersetzen.

Dazu wird die Ausgangsspannung Uind des HF-Gleichrichters der Empfangsseite der induktiven Energieübertragungseinrichtung über einen Schalter S mit dem Punkt P1 der Halbbrücke HB1 des Fahrumrichters verbunden. Damit liegt bei geschlossenem Schalter 164 in Ladebetrieb die Ausgangsspannung Uind des HF-Gleichrichters am Anfang der Motorwicklung U1 an.

Bei der in Fig. 18 gezeigten Möglichkeit wird jetzt die Halbbrücke HB2 getaktet, damit kann der Stromfluss über die Motorinduktivitäten Lm1 und Lm2 zur Fahrzeugbatterie mittels PWM-Modulation eingestellt werden. Lm1, Lm2 bilden zusammen mit der HB2 einen Hochsetzsteller.

Bei der in Fig. 19 gezeigten Möglichkeit werden HB2 und HB3 getaktet angesteuert. Jetzt werden Lm1, Lm2 und Lm3 des Motors bestromt. Der Vorteil bei dieser Art der Betriebsweise liegt in der Möglichkeit HB2 und HB3 phasenversetzt mit PWM anzusteuern und so einen zweiphasigen Hochsetzsteller zu realisieren, welcher interleaved arbeitet. Dadurch ergeben sich alle damit verbundenen und dem Stand der Technik entsprechenden Vorteile.

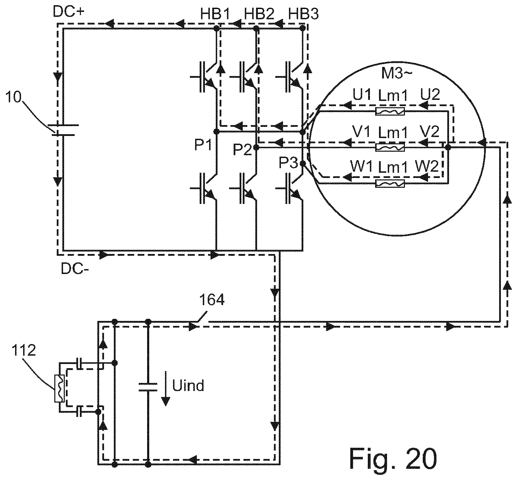

Bei der in Fig. 20 gezeigten Möglichkeit, werden alle drei Halbbrücken HB1, HB2 und HB3 für eine dreiphasen interleaved Hochsetzsteller-Topologie verwendet werden. Dazu muss das induktive Ladesystem über einen Schalter 164 mit dem Motorsternpunkt 168 verbunden werden.

Werden jetzt HB1, HB2 und HB3 mit jeweils 10 kHz Taktfrequenz und phasenverschoben betrieben ergibt sich eine effektive Taktfrequenz von 30 kHz. Der Schalter ist in diesem Fall für die Funktion nicht ausschlaggebend und kann auch weggelassen werden, indem das induktive Ladesystem direkt mit dem Sternpunkt des Motors verbunden wird.

Werden die Motorinduktivitäten für einen Ladebetrieb genutzt, muss sichergestellt werden, dass kein drehmomentbildender Stromfluss im Motor entsteht. Da im Ladebetrieb Gleichstrome durch die Motorinduktivitäten fliesen, entsteht zunächst innerhalb des Motors ein statisches Magnetfeld und kein Drehfeld.

Handelt es sich bei der elektrischen Maschine um eine Synchronmaschine mit Permanentmagneten auf dem Rotor, kann das statische Magnetfeld dennoch, je nach Rotorlage, zu einer Kraft auf den Rotor fuhren. Hier muss im Einzelfall geprüft werden, ob diese Kraft akzeptiert werden kann.

Außerdem muss darauf geachtet werden, dass eine akzeptable oder gar keine Geräuschentwicklung durch die PWM-Frequenz entsteht. Hier ist der Betrieb von zwei Halbbrücken im interleaved Modus vorteilhaft, da sich dadurch die doppelte effektive Taktfrequenz erreichen lässt. Werden z. B. HB2 und HB3 jeweils mit 10 kHz Taktfrequenz aber 50% phasenversetzt zueinander angesteuert, ergibt sich eine effektive Taktfrequenz von 20 kHz welche schon außerhalb des für den Menschen hörbaren Bereichs liegt. Werden wie unter Möglichkeit 3 beschrieben alle drei Halbbrücken phasenversetzt getaktet ergibt sich bei einer Taktfrequenz von 10 kHz eine effektive Taktfrequenz von 30 kHz, was in Hinblick auf die Geräuschentwicklung nochmal vorteilhafter als die Möglichkeit 2 ist.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Anordnung
- 10: Fahrzeugakku
- 20: Versorgungsnetz
- 15: Anschluss für Kühlwasser
- 25: Empfangsspuleneinheit
- 32,34: Kommunikationsleitungen
- 40: Verriegelungsschalter
- 102: PFC
- 102a: PFC mit galvanischer Trennung
- 104: Zwischenkreis
- 106: DC-DC-Wandler
- 106a: DCDC-Wandler ohne galvanische Trennung
- 110: Wandlerstufe
- 112: PFC mit galvanischer Trennung
- 114: Gleichrichter
- 116: DC-DC-Wandler
- 120: Überbrückungsschalter
- 128: Netzfilter
- 150: Onboard-Ladegerät, Schaltungseinrichtung
- 160: Onboard-Leistungselektronik zum induktiven Laden, Fahrumrichter
- 162: HF-Gleichrichter
- 163: Drossel
- 164: Schalter
- 170: Motor
- 200: Wandlerkonzept
- 202: Netzfilter
- 204: Niederfrequenzgleichrichter
- 206: PFC-Boost-Schalteinrichtung
- 208: HF-Wechselrichter
- 210: Hochfrequenztransformator
- 212: HF-Gleichrichter
- 214: Kondensator
- 216: Speicherdrossel
- 218: Resonanzkreis
- 220: LCC-Wandler
- 300: magnetisches Wechselfeld
- 320: Empfangsspule mit Resonanzkreis
- 321: Resonator
- 322: Gleichrichter akitv oder passiv
- 324: DC-DC-Wandler
- 340: AC-Schalter (links das ideale Schaltsymbol, rechts eine mögliche Art der Realisierung)
- 344: MOSFETs
- HB1: Halbbrücke
- HB2: Halbbrücke
- HB3: Halbbrücke
- Lm1: Motorinduktivität
- Lm2: Motorinduktivität
- Lm3: Motorinduktivität
- L1: Phase
- M: Motor
- N: Neutralleiteranschluss

## Patentansprüche

1. Ladeanordnung (1) zum induktiven Laden von Kraftfahrzeugbatterien (10) mit, einer Ladeeinrichtung (2) und einem Kraftfahrzeug, wobei die Ladeeinrichtung (2) zumindest eine Ladespule aufweist, welche zum Laden der Kraftfahrzeugbatterie (10) mit einer fahrzeugseitigen Empfangsspuleneinrichtung (112) zusammenwirkt,
**dadurch gekennzeichnet, dass**
das Kraftfahrzeug mittels wenigstens einer Schaltungseinrichtung (150, 102, 104, 106) auch zum konduktiven Laden geeignet ist und diese Schaltungseinrichtung (150, 102, 104, 106) auch für den induktiven Ladevorgang geeignet und bestimmt ist und zumindest auch für den induktiven Ladevorgang aktivierbar ist.

2. Ladeanordnung (1) nach Anspruch 1,
**dadurch gekennzeichnet, dass**
das Kraftfahrzeug und/oder die Kraftfahrzeugbatterie (10) sowohl induktiv als auch konduktiv ladbar ist.

3. Ladeanordnung (1) nach wenigstens einem der vorangegangenen Ansprüche,
**dadurch gekennzeichnet, dass**
das Kraftfahrzeug eine Vielzahl von Schaltungseinrichtungen (104, 106, 108, 112, 114,) zum Laden der Kraftfahrzeugbatterie (10) aufweist.

4. Ladeanordnung (1) nach dem vorangegangenen Anspruch,
dass wenigstens eine der Schaltungseinrichtungen (112, 114) nur für den induktiven Ladevorgang aktivierbar ist.

5. Ladeanordnung (1) nach dem vorangegangenen Anspruch,
**dadurch gekennzeichnet, dass**
die wenigstens eine Schaltungseinrichtung, die für nur für den induktiven Ladevorgang aktivierbar ist eine Gleichrichtereinrichtung ist.

6. Ladeanordnung (1) nach wenigstens einem der vorangegangenen Ansprüche,
**dadurch gekennzeichnet, dass**
wenigstens eine Schaltungseinrichtung nur für den konduktiven Ladevorgang aktivierbar ist.

7. Ladeanordnung (1) nach wenigstens einem der vorangegangenen Ansprüche,
**dadurch gekennzeichnet, dass**
die Ladeanordnung (1) eine Schalteinrichtung aufweist, um wahlweise einen konduktiven oder einen induktiven Ladevorgang zu aktivieren.

8. Ladeanordnung (1) nach wenigstens einem der vorangegangenen Ansprüche,
**dadurch gekennzeichnet, dass**
die Schaltungseinrichtung (102, 104, 106, 106) aus einer Gruppe von Schaltungseinrichtungen ausgewählt ist, welche DC-DC Wandler, insbesondere galvanisch getrennte DC-DC Wandler, Zwischenkreise, PFC - Schaltungen, PFC - Schaltungen mit galvanischer Trennung und dergleichen enthält.

9. Elektrisch betriebenes Kraftfahrzeug mit wenigstens einer elektrisch ladbaren Energiequelle und einer elektronischen Ladeeinheit,
**dadurch gekennzeichnet, dass**
das Kraftfahrzeug sowohl induktiv als auch konduktiv ladbar sind, wobei bevorzugt wenigstens eine Schaltungseinrichtung der elektronischen Ladeeinheit sowohl für den induktiven Ladevorgang als auch für einen konduktiven Ladevorgang aktivierbar ist.
